## Europäisches Patentamt
## European Patent Office
## Office européen des brevets

(11) Veröffentlichungsnummer: **0 187 214**
**A1**

(12) # EUROPÄISCHE PATENTANMELDUNG

(21) Anmeldenummer: 85113853.7

(22) Anmeldetag: 31.10.85

(51) Int. Cl.⁴: **B 60 C 25/00**
**B 60 C 25/14, B 60 C 25/02**

(30) Priorität: 07.12.84 DE 3444603

(43) Veröffentlichungstag der Anmeldung:
16.07.86 Patentblatt 86/29

(84) Benannte Vertragsstaaten:
AT BE CH DE FR GB IT LI LU NL SE

(71) Anmelder: **Ernst, Wilhelm**
**Grenade 35**
**CH-1510 Moudon(CH)**

(72) Erfinder: **Ernst, Wilhelm**
**Grenade 35**
**CH-1510 Moudon(CH)**

(74) Vertreter: **Schmitt, Hans, Dipl.-Ing. et al,**
**Patentanwälte Dipl.-Ing H. Schmitt Dipl.-Ing. W. Maucher**
**Dreikönigstrasse 13**
**D-7800 Freiburg(DE)**

(54) **Handmontage-Gerätesatz für Reifendecken.**

(57) Ein Handmontage-Gerätesatz (1) für Reifendecken (5) dient zum Aufwerfen oder Abnehmen von Reifendecken von luftbereiften Rädern, insbesondere von Zweiradreifen, wobei insbesondere die Felgenoberfläche vor Beschädigungen geschützt bleiben soll. Zu diesem Gerätesatz gehört ein Handhebel (7), der in der Gegend seines Auflageendes (8) als Widerlagerhaken (10) ausgebildet ist. In einem auf die Felgenbreite (B) abgestimmten oder abstimmbaren Abstand vom Auflageende ist ein Druckstück (13) zum Angreifen an den auf- oder abzuwerfenden Seitenrand-Abschnitt (14) der Reifendecke (5) vorgesehen. Mit diesem Gerätesatz (1) wird das Aufwerfen und Demontieren von Reifendecken erheblich erleichtert und kann auch durch weniger geübte Personen durchgeführt werden. Dabei nimmt der gegebenenfalls durch weitere Hebel ergänzbare Gerätesatz (1) nur verhältnismäßig wenig Platz in Anspruch, so daß er auch bei Zweirädern mitgeführt werden kann.

./...

Fig. 1

PATENTANWÄLTE
DIPL.-ING. H. SCHMITT
DIPL.-ING. W. MAUCHER

78 FREIBURG I. BR.
DREIKÖNIGSTR. 13
TELEFON: (0761) 70773
70774

30. Okt. 1985

S/04 87214

Anm.:
Herr
Wilhelm Ernst
Grenade 35
CH-1510 Moudon

UNSERE AKTE · BITTE STETS ANGEBEN·

E 85 317 S

## Handmontage-Gerätesatz für Reifendecken

Die Erfindung betrifft einen Handmontage-Gerätesatz gemäß dem Oberbegriff des ersten Anspruches.

Das Aufwerfen von Manteldecken auf Reifen insbesondere von Motorrädern ist vergleichsweise schwierig. Insbesondere fehlt es an geeigneten Handmontagegeräten, die wenig Platz in Anspruch nehmen und bei Motorrädern, Mopeds oder gegebenenfalls auch bei Fahrrädern gut mitgeführt werden können. Beim Aufwerfen von Reifendecken von Mopeds bestehen nämlich ähnliche Schwierigkeiten, in gewissem Umfang auch noch bei Fahrrädern.

Es ist zwar bekannt, sich beim Aufwerfen von Fahrradreifen mit einem oder zwei flacheisenartigen Fahrradschlüsseln, Schraubenziehern oder ähnlichen Werkzeugen zu behelfen, die z. B. auch in einer Fahrradtasche bequem mit dem Fahrzeug mitgeführt werden können. Bei Fahrradreifen sind diese Arbeiten mit solchen Hilfswerkzeugen zwar unbequem, können jedoch von einigermaßen geschickten Personen noch durchgeführt werden. Beim Aufwerfen von Reifendecken von Motorrad-Rädern machen derartige Arbeiten jedoch den Motorrad-Benutzern i. d. R. große Schwierigkeiten. Nicht selten sind Motorrad-Benutzer nicht in der Lage, bei einer Reifenpanne derartige Arbeiten selbst durchzuführen. Mit solchen Arbeiten vertraute Personen wie z. B. Werkstatt-Personal nehmen dazu größere Montierschlüssel, Montiereisen od. dgl. und sie können aufgrund ihrer Geübtheit mittels dieser geeigneteren Werkzeuge solche Arbeiten mit einem zufriedenstellenden Arbeitsaufwand zuverlässig ausführen.

Derartige Hilfswerkzeuge sind aber gewöhnlich nur in einer Werkstatt vorhanden und zum Mitführen bei Motorrädern sowie insbesondere bei Mopeds und Fahrrädern zu sperrig.

Hinzu kommt noch folgendes: Die Felgen von Motorrädern sind seit einiger Zeit häufig mit einer gut ansehnlichen, aber empfindlichen Oberflächenschicht versehen. Beispielsweise haben die Felgen eine eloxierte Oberfläche, einen Metallic-Anstrich od. dgl. Ausgestaltung, bei der Kratzer, Beschädigungen uw. besonders unangenehm ins Auge fallen.

Es besteht daher die Aufgabe, ein Handmontage-Gerätesatz zum Aufwerfen oder Abnhemen von Reifendecken von luftbereiften Rädern, insbesondere von Zweiradreifen zu schaffen, mit dem auch fachlich nicht geschulte Personen eine Reifendecke aufwerkfen können, wobei die Abmessungen dieses Gerätes sein Mitführen bei einem Motorrad, Moped od. dgl. Zweirad leicht ermöglicht.

Die erfindungsgemäße Lösung dieser Aufgabe besteht bei einem Handmontagegerätesatz der eingangs erwähnten Art insbesondere aus den Merkmalen des Kennzeichnungsteiles des ersten Anspruches. Mit Hilfe eines solchen Gerätes kann die Radfelge von innen her untergriffen werden und der Widerlagerhaken findet eine Auflage auf demjenigen Felgenrand, an dem bereits die Reifendecke montiert ist. Mit dem Druckstück kann man dann          einen Abschnitt des aufzuwerfenden Seitenrandes einer Reifendecke untergreifen und über den entsprechenden Randabschnitt der Felge herüberheben und dort hineinbringen.

Dabei wird auch vermieden, daß ein Montageeisen gerade an der Stelle auf einem Felgenrand aufgelegt wird, an der der Seitenrand der Reifendecke aufgeworfen werden soll, wodurch man gezwungen ist, den Reifen-Seitenrand dort entsprechend der Dicke des Montiereisens besonders hoch anzuheben. Auch wird die Gefahr der Fehlbenutzung, insbesondere durch weniger geschulte Personen, wesentlich verringert, beispielsweise dadurch, daß beim vorbeschriebenen Handhebel des Gerätesatzes vermieden wird, daß ein unterhalb der Reifendecke befindlicher Luftschlauch verletzt wird. Ferner ist die Gefahr, daß das Gerät beim Aufwerfen des Reifens von der Felge abrutscht und dabei Kratzer oder ähnliche Beschädigungen hinterläßt, wesentlich geringer.

Zusätzliche Weiterbildungen der Erfindung sind in den Unteransprüchen aufgeführt. Dabei begünstigen die Merkmale des 2. Anspruches eine bequeme Handhabung und eine Anpassung des Gerätes an verschieden breite Felgen. Durch die Merkmale des 3. Anspruches wird das Untergreifen des aufzuwerfenden Seitenrandes erleichtert. Die zweiteilige Ausführung des Handhebels gemäß Anspruch 4 ermöglicht nicht nur eine bequeme, platzsparende Unterbringung des Gerätes im zugehörigen Fahrzeug bei gleichzeitig günstig langem Hebelarm während des Aufwerfens, sondern es stehen bei Teilung des Handhebels bereits zwei unabhängige Gerätesatz-Werkzeuge, z. B. beim Abnehmen von Reifen zur Verfügung.

Die Maßnahmen des 7. Anspruches machen das Verlängerungsstück für das Abnehmen einer Reifendecke besonders geeignet.

Eine besonders vorteilhafte Weiterbildung ist in Anspruch 8 aufgeführt. Durch die Anordnung einer Kunststoffschicht wenigstens an einigen, vorzugsweise an allen mit der Radfelge in Verbindung kommenden Teilen des Gerätes kann man Beschädigungen an der Felgen-Oberfläche weitestgehend vermeiden. Auch wenn weniger geübte Personen mit dem Gerät arbeiten und es einmal zu einer fehlerhaften oder ungeschickten Handhabung kommt, werden Beschädigungen der Felgen, insbesondere ihrer empfindlichen Außenseite, weitestgehend vermieden.

Zusätzliche Weiterbildungen sind in weiteren Unteransprüchen aufgeführt. Nachstehend wird die Erfindung anhand von vorteilhaften, in der Zeichnung dargestellten Ausführungsbeispieles noch näher erläutert. Es zeigen, zum Teil in schematisierter Darstellungsweise sowie in unterschiedlichen Maßstäben:

Fig. 1     eine Seitenansicht eines Handhebels, der an eine Felge und eine aufzuwerfende Reifendecke angreift,

Fig. 2     eine Seitenansicht ähnlich Fig. 1,

Fig. 3     ein Verlängerungsstück des Handhebels des Gerätes nach Fig. 1 und 2,

Fig. 4     eine Teil-Aufsicht auf das Gerät ähnlich Fig. 2,

Fig. 5     eine Aufsicht auf das Verlängerungsstück ähnlich Fig. 3,

Fig. 6     in vergrößertem Maßstab das rückwärtige Ende des vorderen Hebelstückes des Handhebels ähnlich Fig. 4,

Fig. 7     eine Teil-Seitenansicht eines etwas abgewandelten Handhebels des Handmontage-Gerätesatzes in verkleinertem Maßstab,

Fig. 8a   Seitenansichten des Handhebels gemäß Fig. 7 in
bis  8c   verschiedenen Betätigungsstellungen in schematisierter Teilseitenansicht mit Querschnitt
          durch eine Reifendecke und eine Radfelge,

Fig. 9    verkleinere, schematisierte Seitenansichten von
u.  10    Handhebeln, die den Handmontage-Gerätesatz er-
          gänzen und

Fig.11    eine Teil-Seitenansicht einer etwas gegenüber

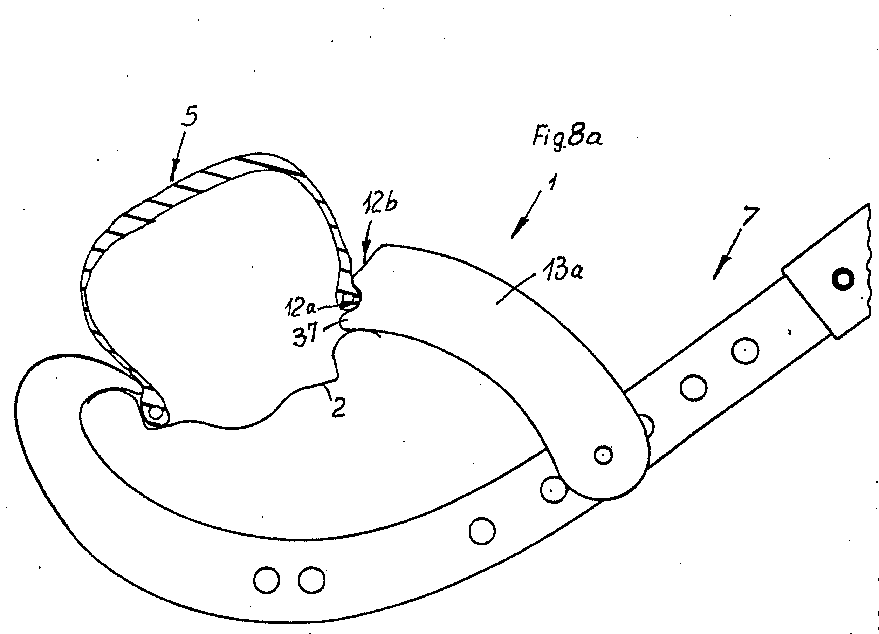

          Fig. 7 abgewandelten Ausführungsform.

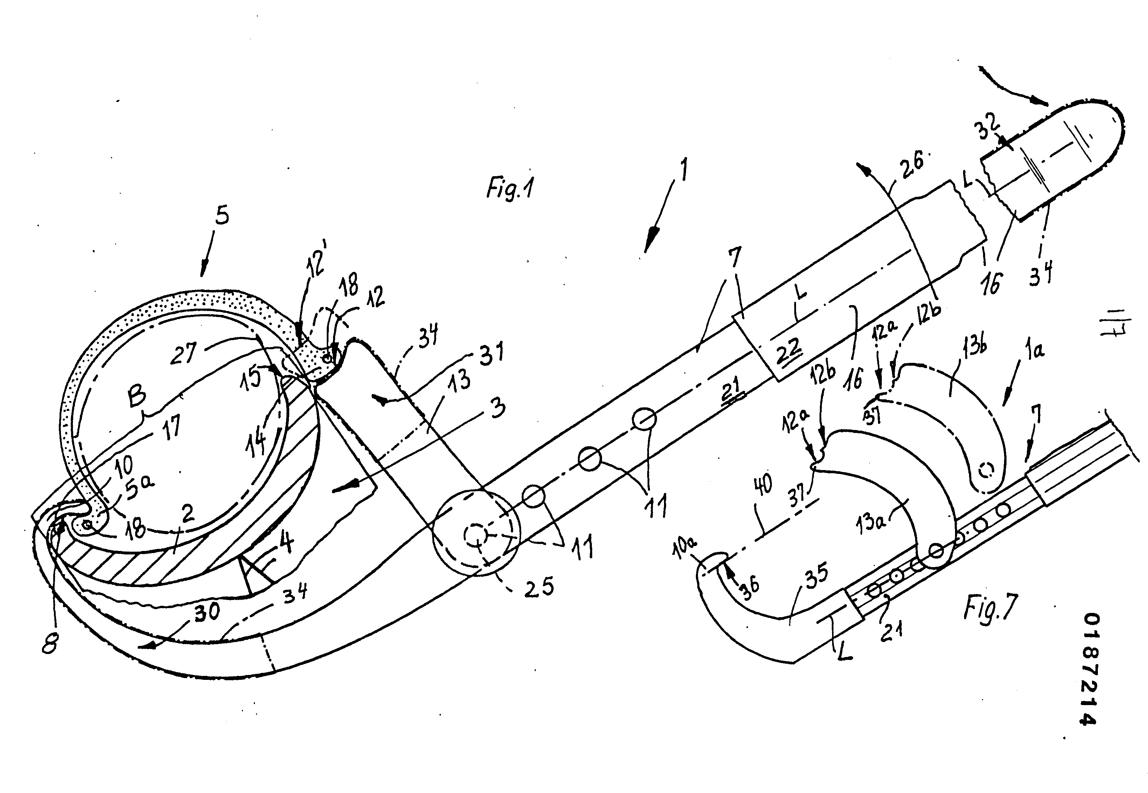

Ein im ganzen mit 1 bezeichneter Handmontage-Gerätesatz (kurz: "Montagesatz 1") dient insbesondere zum Aufwerfen von Reifendecken von luftbereiften Rädern, insbesondere von Zweiradreifen. Fig. 1 zeigt stark schematisiert einen Querschnitt durch die Felge 2, die z. B. zu einem nur teilweise dargestellten Motorrad-Rad 3 gehört. Dessen Speichen sind mit 4 bezeichnet. Eine Reifendecke 5 ist, wie üblich, mit ihrem einen Seitenrand 5 a bereits in die Felge 2 durchgehend eingelegt. Der zwischen Reifendecke 5 und Felge 2 gewöhnlich befindliche Luftschlauch 27 ist strichpunktiert abschnittweise eingezeichnet. Wenn der zweite Seitenrand der Reifendecke 5 in der üblichen Weise auch bereits ähnlich wie der erste Seitenrand 5 a in die Felge 2 abschnittweise eingelegt ist, ergibt sich für einen Restabschnitt des zweiten Seitenrandes 14 der Reifendecke 5 eine Lage, bei der dieser Seitenrand-Abschnitt 14 nur noch unter erheblicher Krafteinwirkung über den benachbarten Felgenrand 15 herüberbewegt werden kann, was durch die Lagezuordnung der Reifendecke 5 und der Felge 2 in Fig. 1 angedeutet worden ist. Um diese Arbeit gut ausführen zu können, hat nun der erfindungsgemäße Montagesatz 1 einen Handhebel 7, der an einem Ende als Widerlagerhaken 10 ausgebildet ist. Dabei kann der Handhebel 7 die Felge 2 innen untergreifen, so daß das Auflageende 8 des Handhebels 7 an demjenigen Felgenrand 17 zur Auflage kommt, der dem anderen Felgenrand 15, über den der Seitenrand-Abschnitt 14 der Reifendecke 5 noch aufzuwerfen ist, gegenüberliegt.

Am Handhebel 7 befindet sich ein Druckstück 13 zum Untergreifen des aufzuwerfenden Seitenrand-Abschnittes 14 der Reifendecke 5. Dabei ist dieses Druckstück 13 um einen Bolzen 25 verschwenkbar am Handhebel 7 angelenkt. Dieser hat mehrere Anlenkstellen 11. Dementsprechend kann das Druckstück 13 unter Anpassung an die Breite B der Felge 2 an entsprechende unterschiedliche Anlenkstellen 11 angebracht werden. Der Montagesatz 1 ist bzw. sein Handgerät 7 dementsprechend in gleicher Ausführung gut für unterschiedlich breite Felgen 2 einzusetzen.

Die dem Seitenrand 14 der Reifendecke 5 zugewandte Stirnseite des Druckstückes 13 ist im Seitenprofil gemäß Fig. 1 mit einer Mulde 12 versehen. Sie ist wenigstens etwa auf das Querschnittprofil des zu umgreifenden Seitenrandes der Reifendecke 5 abgestimmt. Durch die muldenartige Umrißform der Stirnseite des Druckstückes 13 und weil dieses verschwenkbar in seiner Anlenkstelle 11 befestigt ist, drückt das Druckstück 13 bei einer Schwenkbewegung des Handhebels 7 gemäß dem Pfeil 26 den noch aufzuwerfenden Seitenrand-Abschnitt 14 der Reifendecke 5 in Richtung auf den zugehörigen, benachbarten Felgenrand 15, wie mittels der strichpunktiert in Fig. 1 eingezeichneten Mulde 12' angedeutet ist. Der aufzuwerfende Seitenrand-Abschnitt 14 kann sich dann leicht in die Felge 2 hineinbewegen oder z. B. in diesem Abschnitt leicht von Hand dort hineinbewegt werden (Fig. 1). Der vorbeschriebene Vorgang wird dann mehrfach wiederholt in Analogie zu dem bisherigen Aufwerfen solcher Reifendecken 5 mittels Montiereisen, wobei der Montagesatz 1 eine wesentlich einfachere Handhabung ermöglicht. Gegebenenfalls können auch noch die in Verbindung mit 9 u. 10 näher beschriebenen Montiereisen zu Hilfe genommen werden.

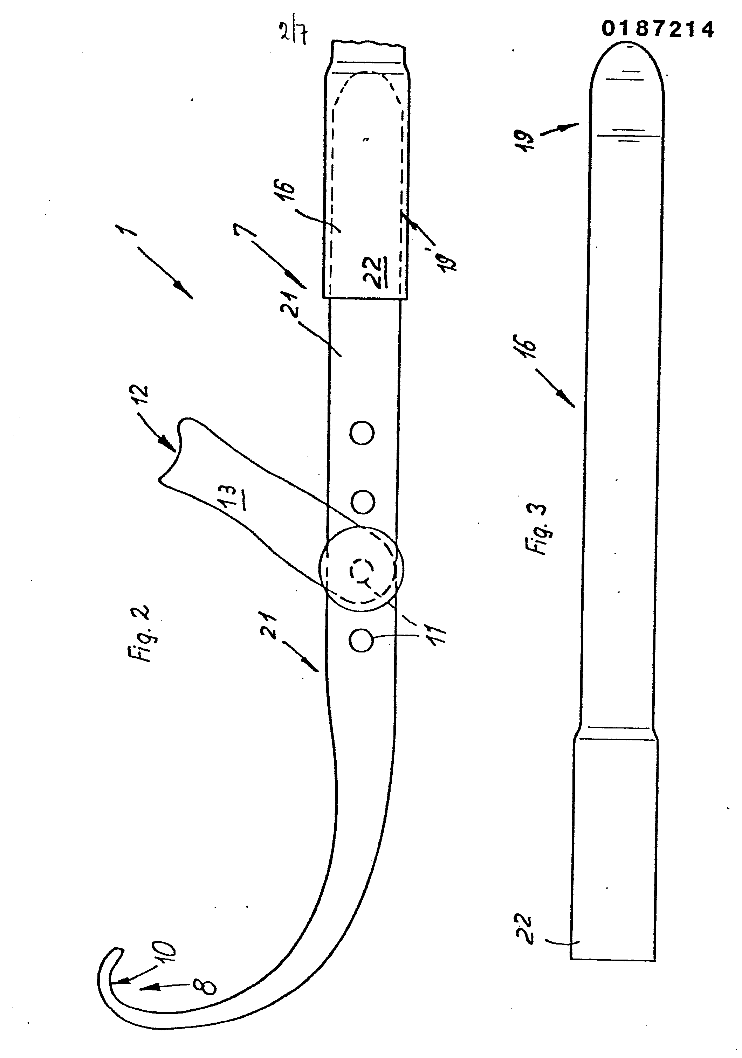

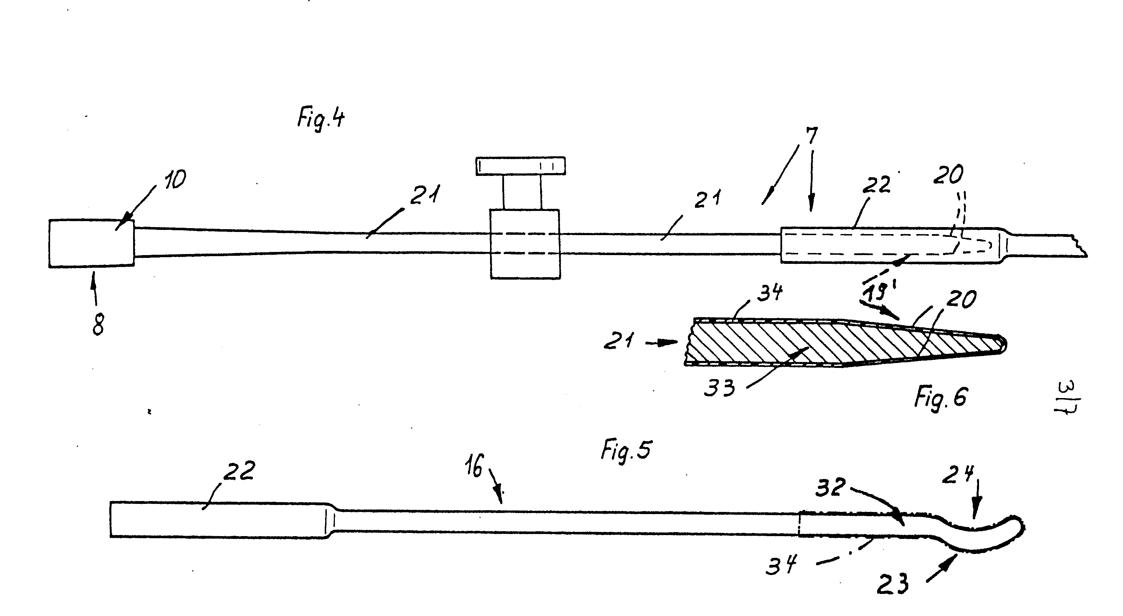

Wie gut aus Fig. 1 bis 3 erkennbar, ist der Handhebel 7 zweiteilig ausgebildet. Er setzt sich aus einem den Widerlagerhaken 10 mitumfassenden vorderen Hebelstück 21 und einem auf dessen rückwärtiges Ende 19' aufsetzbaren Verlängerungsstück 16 zusammen. Wie besonders gut aus Fig. 4 und 6 erkennbar, ist das dem Auflageende 8 abgewandte rückwärtige Ende 19' des vorderen Hebelstückes 21 mit einer Abflachung 20 versehen, wie sie bei Montiereisen für Raddecken üblich ist. Auch das äußere Ende 23 des Verlängerungsstückes 16 besitzt eine besondere, für das Hantieren mit Reifendecken vorteilhafte Ausbildung. Wie besonders gut aus Fig. 5 erkennbar, ist dieses äußere Ende 23 des Verlängerungsstückes 16, von der Schmalseite her gesehen, als abgekröpfte Mulde 24 ausgebildet. Durch die zweiteilige Ausbildung des gesamten Montagesatzes 1, die Abflachung 20 am vorderen Hebelstück 21 und die vorerwähnte muldenartige Ausbildung des äußeren Endes 23 des Verlängerungsstückes 16 erhält man, wenn die Teile 16 und 21 getrennt sind, zwei geeignete Montiereisen zum Abnehmen von Reifendecken 5 von der zugehörigen Felge 2. Man kann nämlich mit der abgekröpften Mulde 24 des Verlängerungsstückes 16 besonders gut einen in der Felge 2 befindlichen Seitenrand 5 a der Reifendecke 5 untergreifen und ihn etwas über den benachbarten Felgenrand 15 oder 17 herüberheben und dann in bekannter Weise mit der Abflachung 20 des vorderen Hebelstückes 21 weitere Seitenrand-Abschnitte 14 der Reifendecke aus dem Bereich der Felge heraushebeln. Dementsprechend ist bereits der zweiteilige Handhebel 7 des Montagesatzes 1 auch gut zum Abnehmen von Reidendecken 5 geeignet.

Das rückwärtige Ende 19' des vorderen Hebelstückes 21 und das Verlängerungsstück 16 sind über eine Steckverbindung zusammensetzbar. Dabei ist, wie besonders gut aus Fig. 4 und 5 erkennbar, das Verlängerungsstück mit einer Steckmuffe 22 versehen, die über die Abflachung 20 des vorderen

8

Hebelstückes 21 hinwegzuschieben ist und das vordere Hebelstück dann z. B. klemmend mit dem Reibschluß umfaßt.

Aus den Fig. 1, 5 und 6″ist noch gut erkennbar, daß diejenigen Endabschnitte 30 bis 33 des Montagesatzes 1, die in die Nähe oder in Berührung mit der Felge 2 kommen, mit einer dünnen Kunststoffschicht 34 ummantelt sind. Diese aus widerstandsfähigem Kunststoff bestehende Schicht ist in den Fig. 1 und 5 strichpunktiert und linienartig sowie in Fig. 6 der Deutlichkeit halber im Schnitt dargestellt. Die Kunststoffschicht 34 ist hart und stabil genug, die auftretenden Kräfte aufzunehmen und weiterzuleiten, sie ist jedoch so weit elastisch, daß Bewegungen des Montagesatzes 1, selbst unerwünschte Abrutschbewegungen, nicht zu Beschädigungen der Felgenoberfläche führen oder solche Beschädigungen zumindest weitgehend vermeiden.
In Fig. 1 erkennt man die beiden in jedem Seitenrand 5 a bzw. 14 der Reifendecke 5 befindlichen Drahtringe 18, die diesen Seitenrändern 5 a, 14 einerseits die erwünschte Formstabilität geben, andererseits beim Aufwerfen oder Abnehmen der Reifendecke der Bedienungsperson erheblichen Kraftaufwand abverlangen. Dadurch, daß der Montagesatz 1 einen vergleichsweise langen, durch das Verlängerungsstück 16 entsprechend zu bemessenden Handhebel 7 hat, lassen sich die benötigten Kräfte auch gut von Nicht-Fachleuten aufbringen. Mit dem Montagesatz 1 können dabei auch örtliche, z. B. punktweise Überlastungen sowohl am Seitenrand-Abschnitt 14 der Reifendecke 5 als auch an der Felge 2 weitestgehend vermieden werden. Auch besteht praktisch keine Gefahr mehr, daß ein Luftschlauch 27 vom Montagesatz 1 eingeklemmt oder anderweitig beschädigt wird. Auch dazu trägt die Kunststoffschicht 34 bei. In Fig. 7 ist in verkleinertem Maßstab eine abgewandelte, bevorzugte Ausführungsform eines Handmontagegerätes 1 a dargestellt. Bei ihm besteht beim vorderen Hebelstück 21 der auflagennahe Teil mindestens im wesentlichen, vorzugsweise vollständig aus einem Kunststoffhaken 35. Zweckmäßigerweise ist die abgekröpfte Auflageseite 36 des Widerlagerhakens 10 a etwa parallel zur Längsachse L des Handhebels 7 ausgebildet, was dort durch die beiden parallel eingezeichneten strichpunktierten Linien L und 40 angedeutet ist. Die vorbeschriebene Ausführung des auflagenendenahen Teils des Hebelstückes 21 aus Kunststoff trägt dazu bei, daß auch bei stärkeren, z. B. örtlichen Überlastungen die Gefahr der Beschädigung der Felgenoberfläche vermieden wird. Ferner läßt sich die gewünschte Form des Kunststoffhakens bei diesem Werkstoff besonders leicht herstellen und die besondere Orientierung der Auflageseite 36 des Widerlagerhakens 10 a erleichtert die Handhabung des Montagesatzes 1.

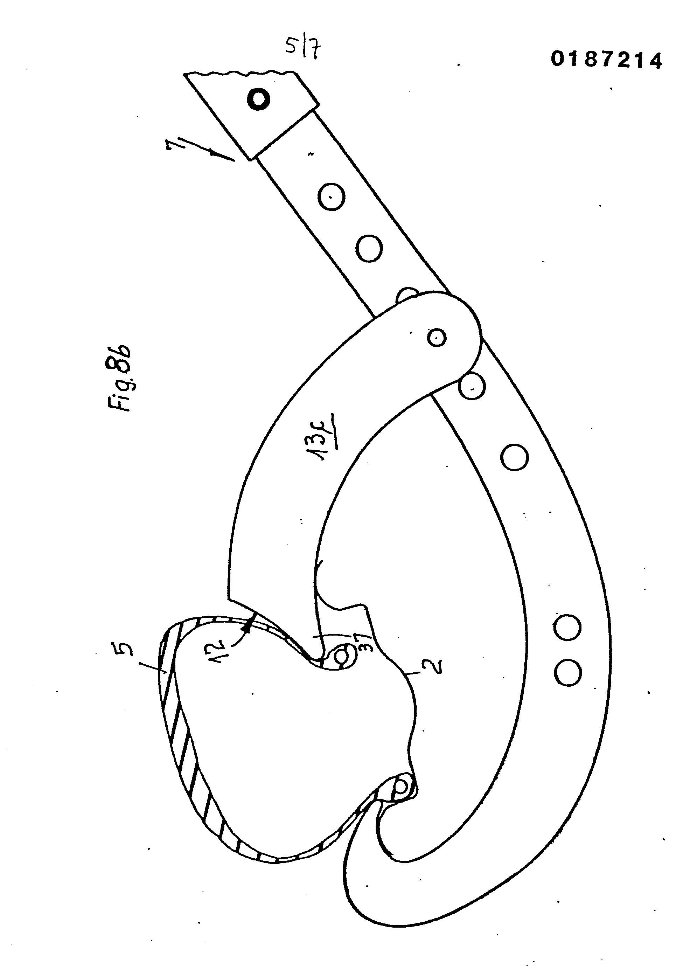

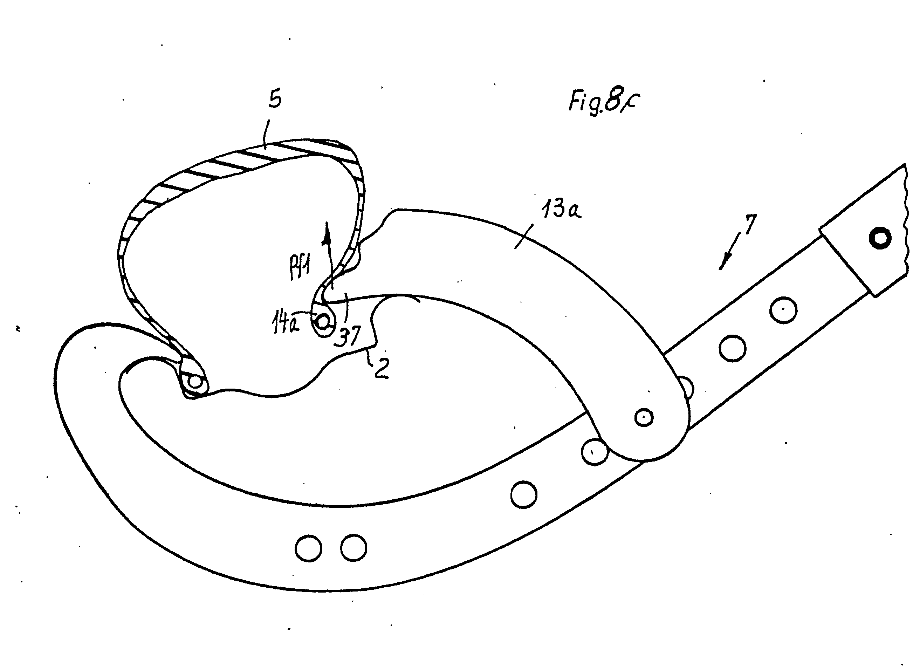

Eine weitere, vorteilhafte Weiterbildung des Montagesatzes 1 a ist in Fig. 7 bei dem Druckstück 13 a erkennbar. Es besitzt an seiner Stirnseite im Gegensatz zum Druckstück 13 gemäß Fig. 1 zwei Mulden 12 a u. 12 b. Dabei ist wenigstens die der Felge 12 benachbarte Mulde 12 a mit einem kleineren Krümmungsradius ausgebildet und sie geht über in eine Nase 37, die an derjenigen Stirnseite des Druckstückes 13 angeordnet ist, das dem Widerlagerhaken 10 a benachbart ist. In Fig. 7 ist neben dem vorbeschriebenen Druckstück 13 a strichpunktiert und noch nicht mit dem Handhebel 7 befestigt dargestellt ein weiteres, etwas abgewandeltes Druckstück 13 b. Es unterscheidet sich vom vorbeschriebenen Druckstück 13 a lediglich durch etwas geringere Abmessungen. Am Montagesatz 1 bzw. 1 a sind die Druckstücke unterschiedlicher Größe und gegebenenfalls Form austauschbar. Insbesonderer ist das Druckstück 13 b gemäß Fig. 7 gegenüber dem Druckstück 13 a dann austauschbar vorgesehen, wenn der Montagesatz 1 a für kleinere Reifen vorgesehen ist. Bei gleichbleibenden Hauptbestandteilen kann also der gesamte Handmontage-Gerätesatz 1, la usw. leicht durch Austauschen z. B. nur eines Teiles für einen größeren Anbaubereich realisiert werden. Analoges gilt für die entsprechende Größengestaltung des Kunststoffhakens 35. Die Druckstücke 13 und insbesondere die mit der etwas vorstehenden Nases 37 versehenen Druckstücke 13 a bzw. 13 b bestehen aus Kunststoff. Sie sind dann, auch in ihrer speziellen Profilierung, vergleichsweise leicht herzustellen und es gelten überdies die bereits in Verbindung mit dem Kunstoffhaken 35 genannten Vorteile. Die Vorteile der besonderen Ausbildung der Mulde 12 a bzw. Mulden 12 a und 12 b bzw. der vorstehenden Nase 37 bei den Druckstücken 13 werden nachstehend in Verbindung mit den Fig. 8 und 11 noch näher beschrieben.

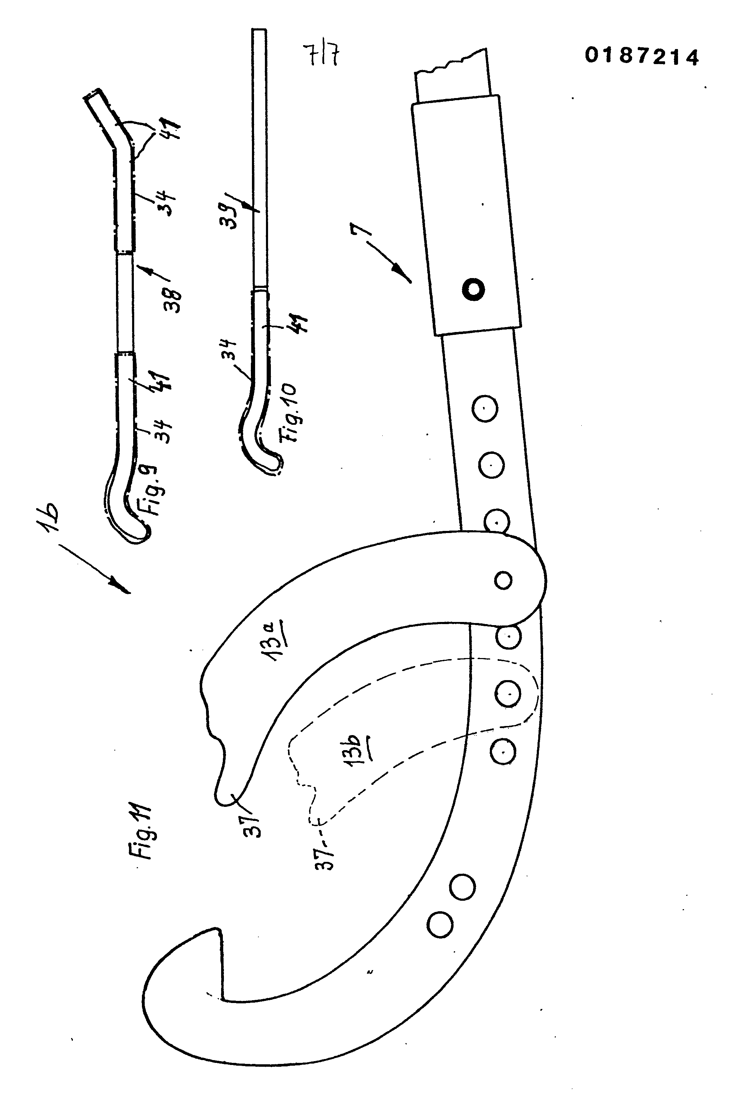

In Fig. 11 ist noch ein Montagesatz 1 b dargestellt, zu dem außer dem Handhebel 7 noch zwei Montage- bzw. Demontagehebel 38 und 39 gehören. Bezüglich der Umrißform entsprechen sie im wesentlichen den bekannten Montagehebeln dieser Art. Jedoch weisen sie wenigstens an einem Montageende 41 (vgl. Montagehebel 39 in Fig. 10) oder vorzugsweise an beiden Montageenden 41 (vgl. Montagehebel 38 in Fig. 9) in Anpassung an den Montagesatz 1 bzw. 1 a einen Kunststoffüberzug 34 auf, der in Fig. 9 u. 10 nur abschnittweise strichpunktiert angedeutet ist. Derartige, mit Kunststoffüberzügen 34 versehene Hebel 38 und 39 ergänzen bedarfsweise den Montagesatz 1 entsprechend und helfen, daß Reifendecken 5 leicht ohne Beschädigung der Felgen 2 auf- und abmontiert werden können.

In Fig. 8 a ist noch, stärker schematisiert, der Vorgang des Montierens mit einem Montagesatz 1 dargestellt, dessen Druckstück 13 a eine vorstehende Nase 37 an seiner Stirnseite sowie eine sich daran anschließende kürzere Mulde 12 a aufweist. Die Felge 2 ist dort nur schematisch als durchgehende Linie angedeutet. Man erkennt, daß man die Reifendecke 5 in der bereits in Verbindung mit Fig. 1 beschriebenen Weise gut aufwerfen kann.

In Fig. 8 c erkennt man gut, wie mit Hilfe der vorstehenden Nase 37 des Druckstücke 13 a bei der Demontage eine Reifendecke 5 ein davon in der Felge 2 liegender, oft dort "klebender" Abschnitt eines zu lösenden Seitenrandes 14 a der Reifendecke 5 in einem verhältnismäßig schmalen Bereich erfaßt und mit einer Druckkomponente beaufschlagt wird, die entsprechend dem Pfeil Pf 1 (Fig. 8 c) auch eine Komponente in Demontagerichtung auf die Reifendecke 5 ausübt. In einer Stellung gemäß Fig. 8 c kann man dann besonders gut mit einem zusätzlichen Hebel, z. B. Hebel 38 oder 39 den gelösten rechten Randabschnitt der Reifendecke unmittelbar benachbart zum Druckstück 13 untergreifen und den dortigen Seitenrand 14 a aus dem Bereich der Felge 2 herausziehen.

Fig. 11 zeigt die in Fig. 7 dargestellten, mit Nasen 37 versehenen Druckstücke 13 a u. 13 b unterschiedlicher Größe nochmals in vergrößerter Darstellung, wobei das kleinere Druckstück 13 b verzerrt und strichpunktiert wiedergegeben ist.

Schließlich zeigt Fig. 8 b ein gegenüber der Darstellung nach Fig. 1 ein ebenfalls mit einer vorstehenden Nase 37, jedoch nur mit einer Mulde 12 versehenes Druckstück 13 c. Man erkennt auch, daß das Lösen der Reifendecke 5 durch die vorstehende Nase 37 begünstigt wird. Besonders vorteilhafte Ausführungsformen stellen jedoch die Druckstücke 13 a u. 13 b mit den beiden kürzeren Mulden 12 a u. 12 b dar. In der Praxis hat sich gezeigt, daß die so ausgeprägte, sich unmittelbar an eine Mulde 12 a anschließende vorstehende Nase 37 besonders gut für das Demontieren einer Reifendecke eignet, ohne daß dadurch die Montage mit einem solchen Druckstück 13 a bzw. 13 b verschlechtert wird. Die Ausführungsform mit den Druckstücken 13 a u. 13 b zeichnen sich also insbesondere dadurch aus, daß dabei sowohl das Aufwerfen als auch das Demontieren der Reifendecken erheblich erleichtert wird.

Auch wenn der Montage-Gerätesatz durch ein oder zwei Hebel 38 bzw. 39 ergänzt ist, erhält man immer noch eine vergleichsweise kleine, gut in Zweirädern mitzuführende Montageeinheit.

Alle vorbeschriebenen und in den Ansprüchen aufgeführten Merkmale können einzeln oder in beliebiger Kombination miteinander erfindungswesentlich sein.

- Ansprüche -

DIPL.-ING. H. SCHMITT
DIPL.-ING. W. MAUCHER

26 FREIBURG I. BR.
DREIKÖNIGSTR. 13
TELEFON: (0761) 70773
70774

30. Ükt. 1985

S/04 87214

13

Anm.:
Herr
Wilhelm Ernst
Grenade 35
·CH-1510 Moudon

UNSERE AKTE - BITTE STETS ANGEBEN:

E 85 317 S

## Ansprüche

1. Handmontage-Gerätesatz (1) zum Aufwerfen oder Abnehmen von Reifendecken (5) von luftbereiften Rädern, insbesondere von Zweiradreifen, wobei dieser Gerätesatz (1) wenigstens einen Handhebel (7) mit einem Auflageende (8) aufweist, dadurch gekennzeichnet, daß der Handhebel (7) in der Gegend seines Auflageendes (8) als Widerlagerhaken (10) ausgebildet ist und in einem auf die Felgenbreite (B) abgestimmten oder abstimmbaren Abstand vom Auflageende ein Druckstück (13) zum Angreifen an den auf- oder abzuwerfenden Seitenrand-Abschnitt (14) der Reifendecke (5) vorgesehen ist.

2. Handmontage-Gerätesatz nach Anspruch 1, dadurch gekennzeichnet, daß das Druckstück (13) des Handhebels (7) verschwenkbar am Handhebel (7) angelenkt ist, vorzugsweise wählbar an unterschiedlichen Anlenkstellen (11).

3. Handmontage-Gerätesatz nach Anspruch 1 oder 2, dadurch gekennzeichnet, daß die einem aufzuwerfenden oder zu lösenden Seitenrand-Abschnitt (14) der Reifendecke (5) zugewandte Stirnseite des Druckstücks (13) wenigstens eine Mulde (12) aufweist, die gegebenenfalls auf das Querschnittsprofil des zu umgreifenden Seitenrand-Abschnittes (14) abgestimmt ist.

/

4. Handmontage-Gerätesatz nach einem der Ansprüche 1 bis 3, dadurch gekennzeichnet, daß sein Handhebel (7) zweiteilig ausgebildet ist, wobei vorzugsweise an ein vorderes Hebelstück (21) ein Verlängerungsstück (16) ansetzbar ist.

5. Handmontage-Gerätesatz nach einem der Ansprüche 1 bis 4, dadurch gekennzeichnet, daß das vordere, mit dem Widerlagerhaken (10) versehene Hebelstück (21) mit seinem Verlängerungsstück (16) über eine Steckverbindung zusammensetzbar ist, vorzugsweise, daß das Verlängerungsstück eine Steckmuffe (22) aufweist, die über die Abflachung (20) des vorderen Hebelstückes (21) hinweg dieses an seinem rückwärtigen Ende (19), zweckmäßigerweise klemmend, umgreift.

6. Handmontage-Gerätesatz nach einem der Ansprüche 1 bis 5, dadurch gekennzeichnet, daß das äußere Ende (23) des Handhebels (7), vorzugsweise seines Verlängerungsstückes (16), als abgekröpfte Mulde (24) ausgebildet ist.

7. Handmontage-Gerätesatz nach einem der Ansprüche 1 bis 6, dadurch gekennzeichnet, daß seine in Arbeitsstellung in die Nähe oder in Berührung mit der Felge (2) kommenden Endabschnitte (30 bis 33) mit einer Kunststoffschicht (34) ummantelt sind.

8. Handmontage-Gerätesatz nach einem der Ansprüche 1 bis 7, dadurch gekennzeichnet, daß er außer dem vorzugsweise zweiteiligen Handhebel (7) mindestens noch einen zusätzlichen Montage- bzw. Demontagehebel, vorzugsweise zwei Montage- bzw. Demontagehebel (38, 39) aufweist, von denen jeder wenigstens an einem, vorzugsweise an beiden Montageenden mit einem Kunststoffüber-

/

zug (34) versehen ist.

9.  Handmontage-Gerätesatz nach einem der Ansprüche 1 bis 8, dadurch gekennzeichnet, daß der widerlagerhakennahe Teil des vorderen Hebelstückes (21) zumindest im wesentlichen aus einem Kunststoffhaken (35) besteht, bei dem die Auflageseite (36) vorzugsweise etwa parallel zur Längsachse (L) des Handhebels (7) verläuft.

10.  Handmontage-Gerätesatz nach einem der Ansprüche 1 bis 9, dadurch gekennzeichnet, daß die mit wenigstens einer Mulde (12, 12 a bzw. 12 b) versehene Stirnseite des Druckstücks (13 a, 13 b, 13 c) an ihren dem Widerlagerhaken (10, 10 a) zugewandten Ende eine etwas vorstehende Nase (37) aufweist, die vorzugsweise in eine kurze Mulde (12 a) übergeht.

11.  Handmontage-Gerätesatz nach einem der Ansprüche 1 bis 10, dadurch gekennzeichnet, daß bei seinem Handhebel (7) mehrere, vorzugsweise zwei unterschiedlich große, austauschbare Druckstücke (13, 13 a, 13 b usw.) vorgesehen sind, von denen mindestens eines zweckmäßi- gerweise aus Kunststoff besteht.

- Zusammenfassung -

0187214

Fig.1

Fig.7

Fig. 2

12

1

13

7

21

16

21

22

10

8

11

19'

22

Fig. 3

16

19

Fig.4

Fig.6

Fig.5

Fig.8a

5    12b    1    7    13a    12a    37    2

0187214

4/7

Fig. 8b

Fig.8f

5

13a

7

Pf1

14a  37

2

0187214

7/7

Fig.9

Fig.10

Fig.11

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-2 258 278  (ERNST) <br> * Insgesamt * | 1-3,6 | B 60 C  25/00 <br> B 60 C  25/14 <br> B 60 C  25/02 |
| A | | 9 | |
| | --- | | |
| A | FR-A- 438 684  (BLAKE) <br> * Figur 1 * | 10 | |
| | ----- | | |

RECHERCHIERTE
SACHGEBIETE (Int Cl 4)

B 60 C  25

Der vorliegende Recherchenbericht wurde für alle Patentansprüche erstellt

| Recherchenort <br> DEN HAAG | Abschlußdatum der Recherche <br> 11-04-1986 | Prüfer <br> VALLE,D. |
|---|---|---|